(19) Europäisches Patentamt / European Patent Office / Office européen des brevets

(11) **EP 2 211 199 B1**

(12) **FASCICULE DE BREVET EUROPEEN**

(45) Date de publication et mention de la délivrance du brevet:
**23.11.2011 Bulletin 2011/47**

(51) Int Cl.:
***G01S 7/02*** *(2006.01)*

(21) Numéro de dépôt: **10150733.3**

(22) Date de dépôt: **14.01.2010**

(54) **Procédé et dispositif pour la détection de trous de propagation dans un signal radar**

Verfahren und Vorrichtung zum Erkennen von toten Zonen in einem Radarsignal

Method and device for detecting radio holes in a radar signal

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **27.01.2009 FR 0900348**

(43) Date de publication de la demande:
**28.07.2010 Bulletin 2010/30**

(73) Titulaire: **Thales**
**92200 Neuilly Sur Seine (FR)**

(72) Inventeurs:
- **Chaure, Christian**
  **29280 Locmaria Plouzane (FR)**
- **Borrel, Patrick**
  **29280 Plouzane (FR)**
- **Christien, Daniel**
  **29200 Brest (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A-2008/002144**

EP 2 211 199 B1

## Description

La présente demande concerne le domaine des détecteurs de radars et plus particulièrement la détection de phénomènes dits de « trou de propagation » à travers une analyse de la variance empirique des paramètres primaires issus de l'acquisition d'un signal provenant d'une source émettrice, par exemple un radar.

Les paramètres primaires sont un ensemble de paramètres caractéristiques dudit signal reçu qui comprennent, entre autres, le niveau de puissance électromagnétique de l'impulsion de signal reçu, sa largeur, sa fréquence ou encore l'angle de la direction d'arrivée du signal.

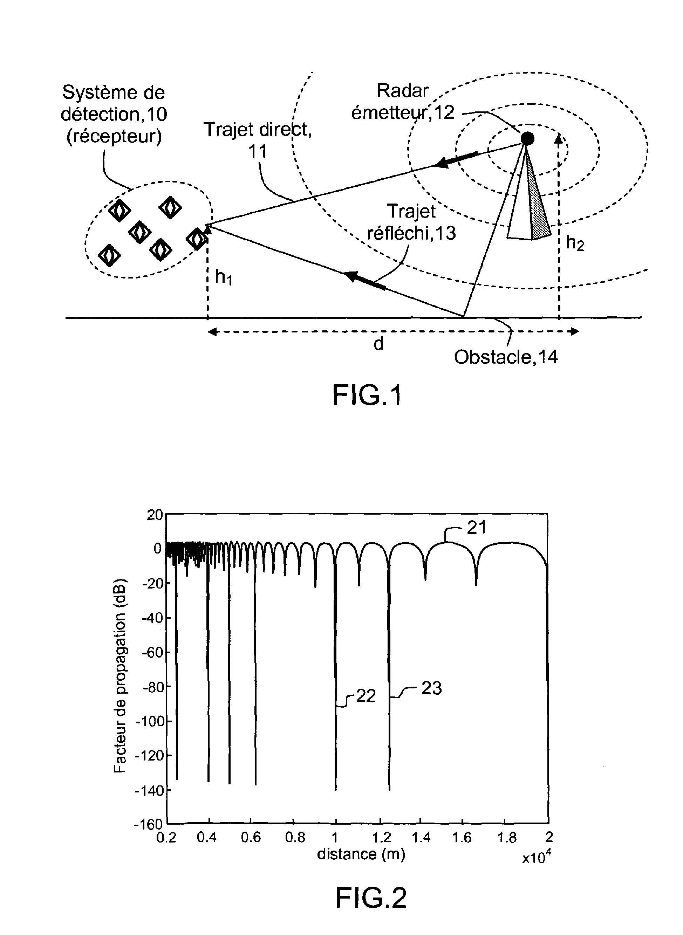

Sur la figure 1 est représenté un système de détection de radars 10 par exemple un système utilisé dans le domaine naval, qui peut être perturbé par un phénomène connu de l'Homme du métier sous l'expression « trou de propagation ». Ledit phénomène résulte de la superposition d'une part d'une onde électromagnétique 11 émise par un radar distant 12 parvenant au récepteur selon un chemin direct avec la même version de ladite onde utilisant un chemin indirect 13 via une réflexion sur un obstacle plan tel que la surface de la mer ou un bâtiment de marine. La direction de propagation de l'onde émise est approximativement située dans un plan passant par l'émetteur et le récepteur. Le signal résultant de cette superposition est reçu par le système de détection 10 qui est par conséquent perturbé par ce phénomène et ne parvient pas à caractériser correctement le radar distant 12. Dans le cas particulier d'un seul chemin indirect réfléchi sur la surface de la mer, comme illustré à la figure 1, le phénomène connu de « trou de propagation » peut être expliqué comme suit. Dans un exemple simplifié, la mesure par le récepteur du signal émis 11 par le radar 12 de fréquence porteuse f et de pulsation $\omega$ a pour expression

$$S_d(t) = \sin(\omega t) = \sin(2\pi f t). \text{ (1)}$$

La réflexion du signal sur la surface de la mer génère un signal réfléchi 13 dont la mesure par le récepteur est définie par la relation suivante

$$S_r(t) = R.\sin(\omega(t - \frac{\delta l}{c}) + \varphi) \text{ (2)}$$

avec $\delta l = |Ld-Lr|$ la différence de trajet entre l'onde directe et l'onde réfléchie, R étant le coefficient de réflexion et $\varphi$ la phase de réflexion.

Si $h_1$ est la hauteur du récepteur 10 par rapport à la mer 14 et $h_2$ est la hauteur du radar émetteur 12 alors la différence $\delta l$ s'écrit selon la relation suivante :

$$\delta l = |Lr - Ld| = \left|\sqrt{d^2 + (h_1 + h_2)^2} - \sqrt{d^2 + (h_2 - h_1)^2}\right| = \left|d.(\sqrt{1 + (\frac{h_1 + h_2}{d})^2} - \sqrt{1 + (\frac{h_1 - h_2}{d})^2})\right| \text{ (3)}$$

et sous l'hypothèse que $h_1 + h_2$ est petit devant d, une approximation du premier ordre donne :

$$\delta l = |Lr - Ld| \approx \left|\frac{d}{2}.((\frac{h_1 + h_2}{d})^2 - (\frac{h_1 - h_2}{d})^2)\right| = \frac{2.h_1.h_2}{d} \text{ (4)}$$

Sous l'hypothèse que le coefficient de réflexion R de l'onde sur la mer est égal à un, et que la phase de réflexion $\varphi$ est égale à $\pi$ le signal reçu par le détecteur 10 est alors :

$$s(t) = \sin(\omega t) + \sin(\omega(t - \frac{\delta l}{c}) + \pi)$$

$$= 2\cos(\omega(t - \frac{\delta l}{2 \cdot c})).\sin(\omega\frac{\delta l}{2 \cdot c}) \qquad (5)$$

$$= 2\cos(\omega(t - \frac{\delta l}{2.c})).\sin(2.\pi.f.\frac{h_1.h_2}{c.d})$$

Le facteur de propagation F est défini par

$$F = \sin(2.\pi.f.\frac{h_1.h_2}{c.d}) = 2\sin(2\pi\frac{h_1.h_2}{\lambda.d}) \quad (6)$$

La figure 2 représente l'évolution du facteur de propagation F par une courbe 21 en forme d'arches. On remarque la présence de trous de propagation 22,23 identifiés par une chute brutale du niveau du facteur de propagation F. Ces trous de propagation 22,23 sont à l'origine d'erreurs observées sur les mesures des paramètres primaires faites par le système de détection de radars. En particulier, le paramètre perturbé en premier lieu est le niveau du signal reçu, qui subit directement une atténuation par une fonction régulière de la distance en forme d'arches telle que celle suivie par le facteur de propagation F et illustré à la figure 2. Le niveau est également affecté d'un bruit atténuateur aléatoire. Le second paramètre perturbé est la mesure de l'angle d'arrivée de l'onde, que cette mesure soit réalisée via un procédé de goniométrie d'amplitude ou de phase. La perturbation observée correspond à un biais systématique fluctuant dans le temps auquel s'ajoute un bruit aléatoire. Le paramètre fréquence du signal reçu devient également imprécis car il est perturbé par le même phénomène de superposition des ondes. Enfin la largeur de l'impulsion reçue est également perturbée car elle découle de la comparaison du niveau du signal reçu à un seuil et également car la superposition des ondes peut provoquer l'annulation du signal à l'intérieur d'une l'impulsion.

La perturbation des quatre paramètres primaires issus du signal reçu par le détecteur engendre, à l'évidence, des difficultés dans l'ensemble du traitement d'analyse et d'identification de la source d'émission par le système de détection.

Les techniques existantes de détection et d'identification de radars mettent en oeuvre différents traitements afin d'acquérir et d'analyser les paramètres primaires de chaque impulsion de signal reçu. Une classification permettant le tri des impulsions par bloc cohérent vise ensuite à séparer les différentes sources émettrices potentielles.

WO 2008002144 divulgue un procédé pour identifier les faux émetteurs observés par un systéme ESM et causé par des signaux utilisant un chemin indirect via une réflexion sur un obstacle plan.

L'analyse des paramètres primaires par un système de détection de sources émettrices peut être très fortement perturbée par le phénomène de trous de propagation tel qu'explicité précédemment. C'est pourquoi il est nécessaire de mettre en oeuvre un procédé permettant de fournir une information sur la détection temporelle de ce phénomène. Cette information peut être utilisée afin d'améliorer l'acquisition et l'analyse desdits paramètres primaires.

Afin de répondre à ce problème, la présente invention propose un procédé permettant de détecter les phénomènes dits de « trous de propagation » dans le signal reçu et ainsi de permettre une amélioration de la mesure et l'analyse des paramètres primaires qui servent à la détection et à l'identification d'un radar.

A cet effet, l'invention a pour objet un procédé de détection de phénomènes de perturbations de type « trou de propagation » 22,23 au sein d'une onde électromagnétique 11 émise par un ou plusieurs radars 12,30 sous la forme d'impulsions, lesdites impulsions étant caractérisées par leur instant d'arrivée TOA et un ensemble de P paramètres primaires, ledit procédé étant caractérisé en ce qu'il comporte au moins les étapes suivantes :

- Pour un bloc indexé temporellement par l'entier k et comportant N impulsions caractérisées chacune par un nombre P de paramètres primaires X(i) dont une mesure est $X_j(i)$, $1 \leq i \leq P$, $1 \leq j \leq N$, calculer une estimation $M_j(i)$ de la mesure $X_j(i)$ en prenant en compte le modèle de variation temporel théorique du paramètre X(i) en l'absence de perturbations,

- Pour le même bloc k, calculer la variance empirique $V_k(i) = \frac{1}{N}\sum_{j=1}^{N}\left[X_j(i) - M_j(i)\right]^2$ de chacun desdits paramètres primaires,

- Pour le même bloc k, calculer la covariance empirique de chacun des couples de paramètres primaires

$$C_k(i,l) = C_k(l,i) = \frac{1}{N} \sum_{j=1}^{N} \left[ X_j(i) - M_j(i) \right] \left[ X_j(l) - M_j(l) \right],$$

$$1 \le i < l \le P$$

- Calculer le déterminant $D_k$ de la matrice de covariance $Cor_k = \begin{bmatrix} V_k(1) & C_k(1,2) & ... & C_k(1,P) \\ C_k(2,1) & V_k(2) & ... & C_k(2,P) \\ ... & .. & ... & ... \\ C_k(P,1) & C_k(P,2) & ... & V_k(P) \end{bmatrix}$,

si P est strictement supérieur à 1 et affecter à $D_k$ la valeur de la variance empirique $V_k(1)$ du seul paramètre primaire utilisé dans le cas où P est égal à 1.

- Calculer la quantité $T_k = \dfrac{N^P . D_k}{\displaystyle\prod_{i=1}^{P} R_i . \prod_{i=1}^{P} \sigma_i^2}$, où $R_i$ est une valeur prédéfinie et $\sigma_i$ est l'écart type nominal connu a priori du paramètre primaire d'indice i,

- Effectuer le test de comparaison suivant où $\beta$ est un entier positif donné :

  ➢ Si $T_k > 1+\beta$, une perturbation est détectée sur le bloc d'indice k,
  ➢ Si $T_k \le 1-\beta$, aucune perturbation n'est détectée sur le bloc d'indice k,
  ➢ Si $1-\beta < T_k \le 1+\beta$, l'information selon laquelle le bloc d'indice k est perturbé ou non est identique à celle du bloc d'indice temporel k-1.

Dans une variante de réalisation de l'invention, la valeur $R_i$ est obtenue à partir d'une table de test de la loi du $\chi^2$ à $m_i$ degrés de liberté et un nombre $\varepsilon$ compris entre 0 et 1 tel que la probabilité qu'une variable aléatoire suivant la loi du $\chi^2$ à $m_i$ degrés de liberté dépasse le seuil $R_i$ est égale à $\varepsilon$.

Dans une variante de réalisation de l'invention, ledit nombre $\varepsilon$ est obtenu à partir du taux de fausse alarme $\alpha$

résultant dudit test de comparaison effectué sur la quantité $T_k$ via la formule suivante $\varepsilon = 1 - \sqrt[P]{1-\alpha}$, ledit taux

de fausse alarme $\alpha$ étant fixé a priori.

Dans une variante de réalisation de l'invention, l'estimation $M_j(i)$ est obtenue par un calcul de moyenne des

mesures $X_j(i)$ ledit calcul étant réalisé de la façon suivante $M_j(i) = \dfrac{1}{N} \sum_{j=1}^{N} X_j(i)$ pour au moins un des paramètres primaires et que la loi du $\chi^2$ utilisée est à $m_i = N-1$ degrés de liberté.

Dans une variante de réalisation de l'invention, l'estimation $M_j(i)$ est obtenue par un calcul de régression linéaire à partir des instants d'arrivée $TOA_j$ de chaque impulsion j ledit calcul étant réalisé de la façon suivante pour au moins un des paramètres primaires : $M_j(i) = A_0 + A_1 TOA_j$ avec

$$[A_0, A_1]^T = [W^T.W]^{-1}.W^T.[X_1(i),...,X_{N_k}(i)]^T, \quad W = \begin{bmatrix} 1 & TOA_1 \\ .. & .. \\ 1 & TOA_j \\ .. & .. \\ 1 & TOA_N \end{bmatrix}$$

où $[]^T$ est l'opérateur de transposition d'une matrice et $[]^{-1}$ est l'opérateur d'inversion d'une matrice, et que la loi du $\chi^2$ utilisée est à $m_i$=N-2 degrés de liberté.

Dans une variante de réalisation de l'invention, l'estimation $M_j(i)$ est obtenue par un calcul de régression parabolique à partir des instants d'arrivée $TOA_j$ de chaque impulsion j ledit calcul étant réalisé de la façon suivante pour au moins un des paramètres primaires : $M_j(i)=A_0+A_1 TOA_j+A_2 TOA_j^2$

avec $$[A_0, A_1, A_2]^T = [U^T.U]^{-1}.U^T.[X_1(i),...,X_N(i)]^T, \quad U = \begin{bmatrix} 1 & TOA_1 & TOA_1^2 \\ \vdots & \vdots & \vdots \\ 1 & TOA_j & TOA_j^2 \\ \vdots & \vdots & \vdots \\ 1 & TOA_N & TOA_N^2 \end{bmatrix}$$ où $[]^T$

est l'opérateur de transposition d'une matrice et $[]^{-1}$ est l'opérateur d'inversion d'une matrice, et que la loi du $\chi^2$ utilisée est à $m_i$=N-3 degrés de liberté.

Dans une variante de réalisation de l'invention, l'estimation $M_j(i)$ est préalablement filtrée par un filtre autorégressif d'ordre 2 ou un filtre de Kalman d'ordre 2.

Dans une variante de réalisation de l'invention, la quantité $T_k$ est filtrée par un filtre lisseur avant d'être utilisée pour ledit test de comparaison.

Dans une variante de réalisation de l'invention, ledit filtre lisseur utilisé pour filtrer la quantité $T_k$ est un filtre du premier ordre ou un filtre à moyenne glissante.

Dans une variante de réalisation de l'invention, lesdits paramètres primaires correspondent à la fréquence de l'impulsion ou à la largeur de l'impulsion ou au niveau de puissance reçu sur l'impulsion ou à l'angle d'arrivée de ladite onde estimé sur l'impulsion.

D'autres caractéristiques et avantages de la présente invention apparaîtront mieux à la lecture de la description qui suit en relation aux dessins annexés qui représentent :

La figure 1, un schéma illustrant le phénomène de réflexion d'un trajet du signal émis sur un obstacle,
La figure 2, une illustration de l'évolution du facteur de propagation en fonction de la distance émetteur-récepteur,
La figure 3, une illustration d'un système mettant en oeuvre le procédé selon l'invention,
La figure 4, un schéma illustrant l'interprétation géométrique du déterminant d'une matrice de covariance.

En annexe de la présente description est mentionné, à titre d'information, un rappel sur certaines notions mathématiques, connues de l'Homme du métier : estimateur de la variance, loi du $\chi^2$, régression linéaire polynomiale, propriétés d'une matrice de covariance et interprétation géométrique de son déterminant. Ces notions sont utilisées dans la suite de la description.

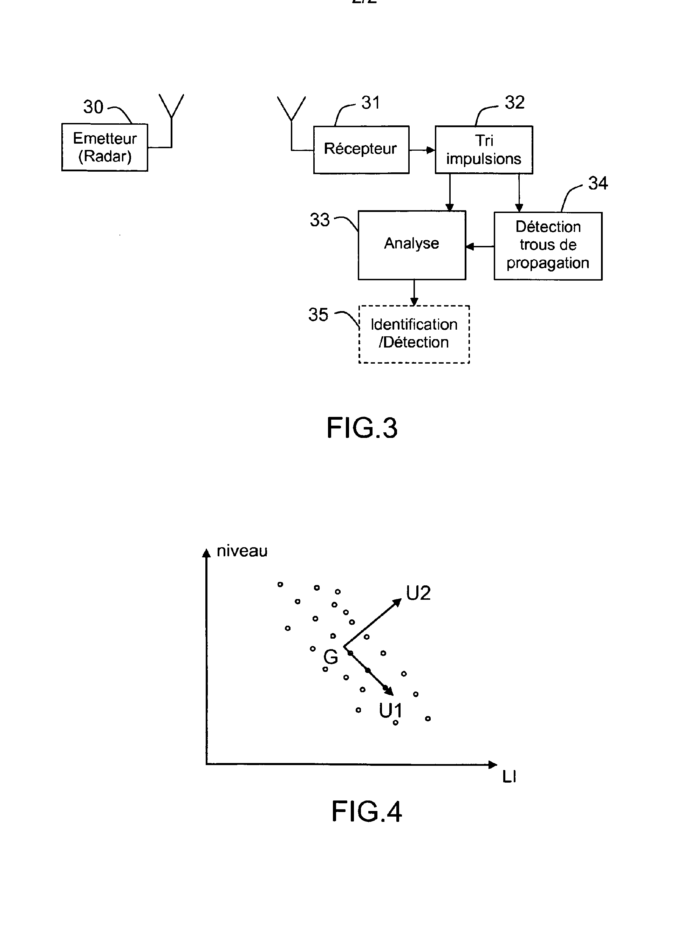

La figure 3 représente le système de détection d'une source émettrice 30, par exemple un radar. Le système comprend un récepteur 31 qui effectue l'acquisition du signal reçu sous forme d'impulsions et en extrait, pour chaque impulsion, les paramètres primaires associés. Une impulsion est décrite par un ensemble de P paramètres primaires, P étant au moins égal à un, parmi lesquels le niveau, la fréquence, l'angle d'arrivée et la largeur ainsi que l'instant d'arrivée de chaque impulsion, connu sous le terme anglo-saxon Time of Arrival ou l'abréviation TOA. Un dispositif 32 effectue ensuite un premier tri des impulsions reçues afin de les classer par blocs cohérents. Un bloc cohérent correspond à un ensemble d'impulsions issues de la même source émettrice. Ce tri est fait en considérant les paramètres de fréquence, d'angle d'arrivée et de largeur d'impulsion. Ledit dispositif 32 fournit donc en sortie un bloc d'impulsions de taille variable. Ledit bloc est analysé par un second dispositif 33 qui produit en sortie une information de détection et d'identification 35 de la ou des sources émettrices 30. Le procédé selon l'invention, visant à détecter les perturbations associées aux trous de propagations dans le signal reçu est par exemple mis en oeuvre via un dispositif 34 sur un bloc d'impulsion relatif à une source émettrice donnée.

La présente invention est notamment basée sur une analyse de la variance empirique de chaque paramètre primaire disponible et exploitable de façon isolée ou conjointe. A titre d'exemple et de façon nullement limitative, la suite de la description traite de l'utilisation des quatre paramètres précédemment introduits, le niveau, la largeur d'impulsion, la fréquence et l'angle d'arrivée, et ce de façon isolée ou conjointe. Tout autre paramètre caractéristique du signal reçu peut être utilisé afin d'y appliquer le même procédé.

En considérant un bloc cohérent, issu du tri des impulsions reçues et contenant N impulsions le procédé selon l'invention peut notamment s'appliquer au paramètre primaire de largeur d'impulsion. Une mesure du paramètre primaire correspondant à la largeur de l'impulsion d'indice j est notée $X_j$ pour j variant de 1 à N. A partir de ces valeurs, la variance empirique $S_N$ du paramètre de largeur d'impulsion est calculée via la relation suivante :

$$S_N = \frac{\sum_{j=1}^{N}[X_j - M_j(X)]^2}{N} \quad (7)$$

où $M_j(X)$ est une estimation du paramètre LI sur le bloc cohérent considéré.

Dans le cas de la réception d'un signal radar sans perturbation, la mesure de largeur d'impulsion est censée être constante sur la durée d'un bloc, l'estimation mise en oeuvre dans cas peut par exemple être une moyenne des valeurs $X_j$ donnée par la relation :

$$M_j(X) = \frac{\sum_{j=1}^{N} X_j}{N} \quad .(8)$$

Sous hypothèse que les mesures de LI correspondent à la réalisation d'un tirage aléatoire de gaussiennes indépendantes et de variance théorique $\sigma_X^2$, la quantité $\frac{N.S_N}{\sigma_X^2}$ est une variable aléatoire qui suit une loi du $\chi^2$ à N-1 degrés de liberté. Une table mémorisée donne les seuils $R_{N-1}$ qui sont fonction d'un paramètre de test $\alpha$ et tels que la probabilité qu'une variable aléatoire suivant une loi du $\chi^2$ à N-1 degrés de liberté dépasse le seuil $R_{N-1}$ est égale à $\alpha$ selon la relation suivante :

$$Pr(\chi_{N-1}^2 > R_{N-1}) = \alpha \quad (9)$$

$\alpha$ étant une valeur très inférieure à 1. Dans la suite de la description la relation Pr(A>B) est utilisée pour faire référence à la probabilité que la quantité A soit supérieure à B.

La quantité suivante :

$$T_X(k,N) = \frac{N.S_N}{\sigma_X^2.R_{N-1}} \quad (10)$$

est par conséquent inférieure à 1 avec une forte probabilité 1-$\alpha$ et ce lorsque le paramètre X suit une variation prévisible, c'est-à-dire en l'absence de phénomène induisant une perturbation du signal. La détection d'un trou de propagation est donc effectuée en comparant la quantité $T_X(k,N)$ à 1. Si le test est positif, c'est-à-dire si $T_X(k,N)$ >1, un trou de propagation est détecté sur le bloc courant d'indice temporel k. La variance théorique du paramètre $\sigma_X^2$ est obtenue via un procédé qui ne fait pas l'objet de la présente demande et est une valeur considérée connue.

Dans une variante de réalisation, et de manière à limiter les fausses alarmes engendrées par une détection positive en l'absence de trou de propagation, un filtre lisseur peut être appliqué sur la suite des $T_t(k,N)$ relatifs aux blocs k, $1 \leq k < K$, K étant le nombre de blocs cohérents relatifs à une même source émettrice. Le filtre peut être, par exemple, un filtre du premier ordre ou un filtre à moyenne glissante. De plus, une hystérésis par utilisation d'un double seuil peut être introduite pour éviter les fluctuations intempestives de l'alarme de détection. Ladite alarme n'est déclenchée que lorsque la sortie du filtre dépasse la valeur $1+\beta$ où $\beta$ est un entier positif donné. Inversement l'annulation de l'alarme, c'est-à-dire la fin d'un trou de propagation est déclarée lorsque la sortie du filtre redevient inférieure à $1-\beta$.

Dans une autre variante, un choix a priori peut être fait sur l'ensemble des impulsions utilisées pour effectuer le calcul de détection. En effet, certaines impulsions, dont le niveau est trop faible pour obtenir des résultats caractéristiques, peuvent être rejetées avant d'appliquer le procédé.

Le procédé selon l'invention tel que décrit précédemment peut également s'appliquer sur le paramètre primaire correspondant au niveau de l'impulsion reçue. En remplaçant la mesure de largeur d'impulsion X par une mesure du niveau reçu, l'ensemble des traitements effectués dans le but de détecter un trou de propagation restent applicables. Dans une variante de réalisation relative au cas où le bloc d'impulsion provient d'un radar à balayage vu dans son lobe principal d'émission, l'hypothèse selon laquelle le niveau des impulsions sur la durée dudit bloc est constant n'est plus valable. Au contraire, ledit niveau exprimé sur une échelle de mesure logarithmique, par exemple en décibels (dB), suit alors une loi de variation pouvant être approximée par une parabole. Dans ce cas, le terme $M_j(X)$ correspondant à une estimation du niveau sur le bloc considéré peut être obtenu via la relation suivante :

$$M_j(X) = (A_0 + A_1.TOA_j + A_2.TOA_j^{\ 2}) \ (11)$$

Où $TOA_j$ est l'instant d'arrivée de l'impulsion d'indice j et les coefficients $A_0$, $A_1$ et $A_2$ sont issus de la régression parabolique réalisée sur la partie du bloc d'impulsions correspondant à un lobe isolé. Ces coefficients minimisent l'équation suivante :

$$J(A_0, A_1, A_2) = \sum_{j=1}^{n} [X_j - (A_0 + A_1.TOA_j + A_2.TOA_j^{\ 2})]^2 \ (12)$$

C'est-à-dire :

$$A = (A_0, A_1, A_2)^T = (W^T.W)^{-1}.W^T.(X_1,...,X_N)^T$$

$$W = \begin{bmatrix} 1 & TOA_1 & TOA_1^{\ 2} \\ \vdots & \vdots & \vdots \\ 1 & TOA_i & TOA_1^{\ 2} \\ \vdots & \vdots & \vdots \\ 1 & TOA_N & TOA_N^{\ 2} \end{bmatrix} \qquad W^T.W = \begin{bmatrix} N & \sum_1^N TOA_j & \sum_1^N TOA_j^{\ 2} \\ \sum_1^N TOA_j & \sum_1^N TOA_j^{\ 2} & \sum_1^N TOA_j^{\ 3} \\ \sum_1^N TOA_j^{\ 2} & \sum_1^N TOA_j^{\ 3} & \sum_1^N TOA_j^{\ 4} \end{bmatrix} \ (13)$$

En prenant l'hypothèse que les mesures de niveau $X_j$ correspondent à la réalisation d'un tirage aléatoire de gaussiennes indépendantes de variance théorique $\sigma_X^2$, la quantité $\dfrac{N.S_N}{\sigma_X^2}$ est une variable aléatoire qui suit une loi du $\chi^2$ à N-3 degrés de liberté. Une table mémorisée donne le seuil $R_{N-3}$ qui est fonction du paramètre de test $\alpha$ et qui suivent la relation suivante :

$$\Pr(\chi_{N-3}^{2} > R_{N-3}) = \alpha \ (14)$$

où Pr est la probabilité qu'une variable aléatoire suivant une loi du $\chi^2$ à N-3 degrés de liberté dépasse le seuil $R_{N-3}$ et $\alpha$ est une valeur très inférieure à 1. La quantité donnée par la relation suivante :

$$T_X(k, N) = \frac{N.S_N}{\sigma_X^{2}.R_{N-3}} \ (15)$$

est par conséquent inférieure à 1 avec une forte probabilité 1-$\alpha$ et ce lorsque le paramètre X, ici le niveau de l'impulsion, suit une variation prévisible, c'est-à-dire en l'absence de phénomène induisant une perturbation du signal. La détection d'un trou de propagation est donc effectuée en comparant la quantité $T_X(k,N)$ à 1. Si le test est positif, c'est-à-dire si $T_X(k,N) > 1$, un trou de propagation est détecté sur le bloc d'indice k. Les variantes de réalisation du procédé selon l'invention telles que décrites pour le cas de figure où X correspond au paramètre de largeur d'impulsion restent valables ici.

Le procédé selon l'invention tel que décrit pour le cas des paramètres primaires correspondant à la largeur et au niveau d'une impulsion peut également s'appliquer sur le paramètre de fréquence de l'impulsion reçue. Pour cela, il est nécessaire de connaître une estimation a priori de la variance $\sigma_X^2$ de la fréquence. La variance théorique du paramètre $\sigma_X^2$ est obtenue via un procédé qui ne fait pas l'objet de la présente demande et est par conséquent considérée comme connue. Un système de détection électronique contient en général une algorithmie d'identification des émissions observées et une bibliothèque des émetteurs parfaitement identifiés qui permet également d'avoir une information sur l'évolution temporelle de la fréquence. Si cette évolution est supposée constante sur la durée d'un bloc cohérent, le procédé décrit pour le cas du paramètre de largeur d'impulsion s'applique à l'identique avec $X_j$ égal à une mesure de la fréquence de l'impulsion d'indice j. Si cette évolution est supposée linéaire, dans ce cas, le terme $M_j(X)$ correspondant à une estimation de la fréquence sur le bloc considéré peut être obtenu via la formule suivante :

$$M_j(X) = (A_0 + A_1.TOA_j) \ (16)$$

Où $TOA_j$ est l'instant d'arrivée de l'impulsion d'indice j et les coefficients $A_0$ et $A_1$ sont issus de la régression linéaire réalisée sur tout ou partie du bloc d'impulsions. Ces coefficients minimisent l'équation suivante :

$$J(A_0, A_1) = \sum_{j=1}^{n} [X_j - (A_0 + A_1.TOA_j)]^2 \ (17)$$

C'est-à-dire :

$$A = (A_0, A_1)^T = (U^T.U)^{-1}.U^T.(X_1,..., X_N)^T \ (18)$$

$$U = \begin{bmatrix} 1 & TOA_1 \\ .. & .. \\ 1 & TOA_i \\ .. & .. \\ 1 & TOA_N \end{bmatrix} \quad U^T.U = \begin{bmatrix} N & \sum_{1}^{N} TOA_j \\ \sum_{1}^{N} TOA_j & \sum_{1}^{N} TOA_j^{2} \end{bmatrix} (19)$$

En prenant l'hypothèse que les mesures de fréquence X$_j$ correspondent à la réalisation d'un tirage aléatoire de gaussiennes indépendantes de variance théorique $\sigma_x^2$, la quantité $\frac{N.S_N}{\sigma_x^2}$ est une variable aléatoire suivant une loi du $\chi^2$ à N-2 degrés de liberté. Une table mémorisée donne les seuils R$_{N-2}$ qui sont fonction du paramètre de test $\alpha$ et tels que $\Pr(\chi_{N-2}^2 > R_{N-2}) = \alpha$ où $\chi_{N-2}^2$ suit une loi du $\chi^2$ à N-2 degrés de liberté et $\alpha$ est une valeur très inférieure à 1. La quantité donnée par la relation suivante

$$T_X(k,N) = \frac{N.S_N}{\sigma_x^2 . R_{N-2}} \quad (20)$$

est par conséquent inférieure à 1 avec une forte probabilité 1-$\alpha$ et ce lorsque le paramètre X, ici la fréquence de l'impulsion, suit une variation prévisible, c'est-à-dire en l'absence de phénomène induisant une perturbation du signal. La détection d'un trou de propagation est donc effectuée en comparant la quantité $T_x(k,N)$ à 1, de la même façon que déjà décrit précédemment. Les variantes de réalisation du procédé selon l'invention telles que décrites pour le cas de figure où X correspond au paramètre de largeur d'impulsion restent valables ici.

Le procédé selon l'invention peut également s'appliquer au paramètre primaire correspondant à l'angle d'arrivée de l'impulsion émise et ce de façon analogue au cas décrit pour le paramètre de largeur d'impulsion. La mesure de l'angle d'arrivée est réalisée par goniométrie de phase ou d'amplitude permettant d'obtenir une mesure d'angle pour chaque impulsion d'un bloc traité. Si X$_j$ est égal à cette mesure d'angle pour l'impulsion d'indice j, le procédé décrit pour le paramètre de largeur d'impulsion s'applique intégralement et de façon similaire.

Dans une variante de réalisation, le calcul de la moyenne de la mesure angulaire $M_j(X)$ sur un bloc d'indice k peut être sensiblement amélioré par un filtrage temporel sur plusieurs blocs. En effet, en l'absence de perturbation la mesure d'angle suit une évolution lente et régulière puisqu'elle correspond à la position angulaire d'une source émettrice située à grande distance du détecteur. Lorsqu'un trou de propagation apparaît, la mesure angulaire moyenne sur un bloc d'impulsion fluctue de façon imprévisible. L'utilisation d'un filtre suiveur permet d'améliorer encore la discrimination de la détection d'un trou de propagation. A ce sujet, différents filtres peuvent être utilisés, par exemple un filtre du second ordre ou un filtre de Kalman d'ordre 2 qui présente l'avantage de permettre une prédiction du terme $M_j(X)$ sur le bloc suivant.

Un ou plusieurs des paramètres primaires précédemment introduits peuvent être utilisés de façon isolée mais également de façon conjointe. En effet, en présence d'un trou de propagation, les perturbations des paramètres primaires sont susceptibles d'être corrélées. Ceci justifie de procéder à une analyse simultanée de P paramètres pris dans l'ensemble de ceux disponibles avec P au moins égal à 1.

Une impulsion d'indice j au sein d'un bloc est représentée par la mesure de ses P paramètres {X$_j$(1), X(2),..., X$_j$(P)}. On considère alors la matrice de covariance

$$Cor_k = \begin{bmatrix} V_k(1) & C_k(1,2) & ... & C_k(1,P) \\ C_k(2,1) & V_k(2) & ... & C_k(2,P) \\ ... & .. & ... & ... \\ C_k(P,1) & C_k(P,2) & ... & V_k(P) \end{bmatrix} (21)$$

où $V_k(i) = \frac{1}{N} \sum_{j=1}^{N} \left[ X_j(i) - M_j(i) \right]^2$ représente la variance empirique du paramètre i et

$$C_k(i,l) = C_k(l,i) = \frac{1}{N} \sum_{j=1}^{N} \left[ X_j(i) - M_j(i) \right]\left[ X_j(l) - M_j(l) \right] \quad (22)$$

$1 \leq i \leq l \leq P$ représente la covariance empirique entre les paramètres i et l.

Le terme $M_j(i)$ correspond à l'estimation du paramètre $i$ sur la durée du bloc considéré, il peut être calculé soit par une moyenne de la mesure $X_j(i)$, soit par une régression linéaire ou parabolique obtenue à partir des instants d'arrivée $TOA_j$ des impulsions.

Une fois obtenue la matrice $Cor_k$ symétrique positive, son déterminant vérifie une inégalité connue de l'Homme du métier et faisant intervenir le produit des P variances empiriques $V_k(i)$ tel qu'explicité en annexe de ce document :

$$0 \leq \det(C_{or_k}) \leq V_k(1).V_k(2)...V_k(N) \quad (23)$$

Pour chaque paramètre considéré, le test du $\chi^2$ permet de calculer un seuil $R_{mi}$ tel que :

$Pr(\chi^2_{m_i} > R_{m_i}) = \varepsilon$, où $m_i$ dépend du type d'estimation mise en oeuvre pour le calcul de $M_j(i)$. Si $M_j(i)$ est le résultat du calcul d'une moyenne alors $m_i = N-1$, si $M_j(i)$ est le résultat du calcul d'une régression linéaire alors $m_i = N-2$, enfin si $M_j(i)$ est le résultat du calcul d'une régression parabolique alors $m_i = N-3$. Sous hypothèse gaussienne on aura donc

$$Pr\{\frac{N.V_k(i)}{\sigma_i^2} \geq R_{m_i}\} = \varepsilon \quad (24)$$

pour $1 \leq i \leq P$ ou encore

$$Pr\{V_k(i) \leq \frac{\sigma_i^2.R_{m_i}}{N}\} = 1 - \varepsilon \quad (25)$$

Or, la relation suivante est connue

$$\{V_k(1) \leq \frac{\sigma_1^2.R_{m_1}}{N}\} \cap \{V_k(i) \leq \frac{\sigma_i^2.R_{m_i}}{N}\} \cap ... \cap \{V_k(P) \leq \frac{\sigma_P^2.R_{m_P}}{N}\} \subset \{\prod_{i=1}^{P} V_k(i) \leq \frac{\prod_{i=1}^{P} R_{m_i}.\prod_{i=1}^{P} \sigma_i^2}{N^P}\} \quad (26)$$

Sous hypothèse d'indépendance des variances empiriques $V_k(i)$ on peut en déduire la relation suivante :

$$Pr\{\prod_{i=1}^{P} V_k(i) \leq \frac{\prod_{i=1}^{P} R_{m_i}^2.\prod_{i=1}^{P} \sigma_i^2}{N^P}\} \geq (1-\varepsilon)^P \quad (27)$$

Et puisque $0 \leq \det(Cor_k) \leq V_k(1).V_k(2)...V_k(N)$ avec une probabilité égale à 1, on obtient le résultat suivant :

$$Pr\{\det(Cor_k) \leq \prod_{i=1}^{P} V_k(i) \leq \frac{\prod_{i=1}^{P} R_{m_i}^2.\prod_{i=1}^{P} \sigma_i^2}{N^P}\} \geq (1-\varepsilon)^P \quad (28)$$

Ou encore :

$$\Pr\{\frac{N^P.\det(Cor_k)}{\prod_{i=1}^{P} R_{m_i} . \prod_{i=1}^{P} \sigma_i^2} \geq 1\} \geq 1-(1-\varepsilon)^P = \alpha \ (29)$$

Ce résultat entraîne à considérer comme statistique de test la quantité :

$$T_k = \frac{N^P.\det(Cor_k)}{\prod_{i=1}^{P} R_{m_i} . \prod_{i=1}^{P} \sigma_i^2} \ (30)$$

qui vérifiera la relation :

$$\Pr\{T_k \geq 1\} \geq 1-(1-\varepsilon)^P = \alpha$$

Le taux de fausse alarme $\alpha$ est fixé a priori et permet de calculer la valeur de $\varepsilon$, $\varepsilon = 1 - \sqrt[P]{1-\alpha}$ , puis l'ensemble des seuils $R_{m_i}$ émorisés en fonction de $\varepsilon$ et vérifiant :

$$\Pr(\chi_{m_i}^2 \geq R_{m_i}) = \varepsilon$$

Les caractéristiques du procédé selon l'invention permettant de détecter la présence d'un trou de propagation à partir de la quantité $T_k$ sont identiques à celles décrites pour le cas d'un seul paramètre isolé, par exemple la largeur d'impulsion.

**ANNEXE**

Rappel mathématique sur l'estimateur de la variance et la loi du $\chi^2$.

Soit $(X_1, X_2, ..., X_n)$ un vecteur aléatoire réel gaussien constitué de n variables gaussiennes indépendantes centrées et de variance $\sigma^2$. L'estimateur le plus classique non biaisé de la variance $\sigma^2$ est : $S = \frac{\sum_1^n (Xi-m)^2}{n-1}$

avec $m = \frac{\sum_1^n Xi}{n}$

Alors $S' = (n-1).\frac{S}{\sigma^2}$ suit une loi $X^2$ du à n-1 degrés de liberté.

En effet, plaçons-nous dans $\mathbf{R}^n$ Soit :
$$\vec{U} = \begin{bmatrix} x_1 \\ x_2 \\ ... \\ x_n \end{bmatrix} \quad \text{et} \quad \vec{V} = \begin{bmatrix} x_1 - m \\ x_2 - m \\ ... \\ x_n - m \end{bmatrix}$$

Avec $m = \dfrac{\sum_{1}^{n} x_i}{n} = \dfrac{1}{\sqrt{n}}.\langle \vec{H} | \vec{U} \rangle$ et $\vec{H} = \dfrac{1}{\sqrt{n}} \begin{bmatrix} 1 \\ 1 \\ ... \\ 1 \end{bmatrix}$ H vecteur unitaire.

On constate que $\vec{V} = \vec{U} - \langle \vec{U} | \vec{H} \rangle.\vec{H}$ est la projection orthogonale du vecteur U sur l'hyperplan H⊥ orthogonale à la première bissectrice portée par H.

Considérons le changement de base orthonormée qui transforme la base canonique orthonormée de $\mathbf{R}^n$ dans la nouvelle base orthonormée $\left[ \vec{H}, \vec{U_2}, \vec{U_3}, ..., \vec{U_n} \right]$ avec $\vec{U_2}, \vec{U_3}, ..., \vec{U_n}$ formant une base orthonormée de l'hyperplan H⊥.

Dans cette base, le vecteur U s'écrit :

$$\vec{U} = x'_1 \bullet \vec{H} + \sum_{2}^{n} x'_i \bullet \vec{U_i}$$

et le vecteur V s'écrit

$$\vec{V} = \sum_{2}^{n} x'_i \bullet \vec{U_i}.$$

On a : $(n-1).S = \left\| \vec{V} \right\|^2 = \sum_{1}^{n} (x_i - m)^2 = \sum_{2}^{n} x'^2$

Si maintenant le vecteur $U$ est un échantillon aléatoire gaussien indépendant centré de variance $\sigma^2$ il en est de même du vecteur $[x'_1\, x'_2 \, ... \, x'_n]$ (transformation par une matrice isométrique). $S' = (n-1).\dfrac{S}{\sigma^2}$ est donc la somme de n-1 carrés de variables aléatoires gaussiennes indépendantes centrées réduites. **Sa loi est donc la loi du $X^2$ à n-1 degrés de liberté.**

Rappel mathématique sur la régression linéaire polynomiale

Soit $(Y_1, Y_2, ...., Y_N)$ un vecteur aléatoire réel gaussien constitué de N variables gaussiennes indépendantes de variance $\sigma^2$ mais dont les moyennes $m_n$ se situent sur une courbe polynomiale $m_n$

$$E(Y_n) = m_n = \sum_{i=\grave{a}}^{i=L} a_i.x_n^{\,i} = P_L(x_n)$$

Autrement dit les couples $(x_n, Y_n)$ se repartissent dans R² autour d'une courbe polynomiale. L'estimateur polynomial des moindres carrés estime la liste des coefficients $a_j$ i = 0 ,..., L en minimisant la fonction :

$$J(a_0,..,a_i,..,a_L) = \sum_{j=1}^{j=N}\left[ Y_j - \sum_{i=0}^{i=L} a_i.x_j^{\ i} \right]^2$$

Ce qui se réécrit, en posant :

$U^T = (a_0,..,a_i,...,a_L)$ vecteur de dimension L+1 $Y^T = (Y_1,.., Y_j ,...,Y_N)$ vecteur de dimension N $M = \begin{bmatrix} 1 & x_1 & x_1^{\ L} \\ \vdots & \vdots & \vdots \\ 1 & x_j & x_j^{\ L} \\ \vdots & \vdots & \vdots \\ 1 & x_N & x_N^{\ L} \end{bmatrix}$

matrice de dimension Nx(L+1)

$$J(a_0,..,a_i,..,a_L) = J(U) = \left\| Y - M.U \right\|_N^{\ 2}$$

La minimisation donne : $U = (M^T.M)^{-1}.M^T.Y$

L'opérateur $P(Y) = M.U = M.(M^T.M)^{-1}.M^T.Y$ est la projection orthogonale de Y sur l'espace vectoriel H de dimension L+1 engendré par les L+1 colonnes de M.

$Z = Q(Y) = Y-P(Y)=(I-M.(MT.M)^{-1}.MT).Y$ est la projection sur l'espace supplémentaire orthogonal de dimension N - (L+1).

$$J = \left\| Z \right\|^2 = \left\| Q(Y) \right\|^2 = \left\| Y - P(Y) \right\|^2 = \left\| (I - M.(M^T.M)^{-1}.M^T).Y \right\|^2$$
$$P = P^T = P^2 = P^T.P \qquad\qquad Q = Q^T = Q^2 = Q^T.Q$$

Supposons le modèle exact :

$$Y = M.U_0 + \mathrm{E}$$

expression dans laquelle le vecteur $U_0$ est fixe et E est un vecteur gaussien de N variables aléatoires indépendantes de moyenne nulle, et d'écart type σ.

On a alors : $Q(Y) = Q(M.U_0 + \mathrm{E}) = Q(\mathrm{E})$ $J = \|Q(Y)\|^2 = \|Q(\mathrm{E})\|^2$ $P(Y) = MU_0 + P(\mathrm{E})$ et $\mathrm{E}(P(Y)) = MU_0$ estimateur sans biais. Effectuons la rotation dans $R^N$ transférant la base canonique dans une base dont les L+1 premiers vecteurs sont orthonormés dans l'espace H et dont les N-(L+1) vecteurs complémentaires sont orthonormés dans $H^\perp$.

Le vecteur aléatoire E transformé reste gaussien indépendant de moyenne nulle et de même variance.

Il est projeté par l'opérateur Q sur les N-(L+1) premières composantes de la base. On a donc :

$$J = \left\| Q(Y) \right\|^2 = \left\| Q(\mathrm{E}) \right\|^2 = \sigma^2. \sum_{i=1}^{i=N-(L+1)} X_i^{\ 2} = \sigma^2.\kappa^2(N-(L+1)) \qquad X_i \approx N(0,\sigma)$$

$$\frac{J}{\sigma^2} = \sum_{i=1}^{i=N-(L+1)} X_i^{\ 2} = \kappa^2(N-(L+1))$$

$\dfrac{J}{\sigma^2}$ suit une loi du X2 à N-(L+1) degrés de liberté.

Rappel mathématique sur les propriétés d'une matrice de covariance

Rappelons ici une inégalité générale entre le déterminant de la matrice de covariance et le produit des variances d'un échantillon aléatoire quelconque.

Soit U= (X1, X2, ...., Xn) un vecteur aléatoire à valeur réelle de variance finie.

Notons V(X1), ..., V(Xn) les variances correspondantes. $V(X_i) = E(X_i^2)$

Soit CX la matrice de corrélation.

$$C_X = \begin{bmatrix} \mathbf{E}(X_1)^2 & \mathbf{E}(X_1 X_2) & \mathbf{E}(X_1 X_i) & \mathbf{E}(X_1 X_n) \\ \mathbf{E}(X_1 X_2) & \mathbf{E}(X_2)^2 & ... & ... \\ ... \, \mathbf{E}(X_1 X_i) & ... & \mathbf{E}(X_i)^2 & ... \\ \mathbf{E}(X_1 X_n) & ... & ... & \mathbf{E}(X_n)^2 \end{bmatrix}$$

On a la relation :

$$0 \le \det(C_X) \le \prod_1^n V(X_i)$$

Le déterminant de la matrice de corrélation est majoré en valeur absolue par le produit des variances des variables Xi.

En effet :

Plaçons-nous dans l'espace vectoriel réel $L^2(\Omega,\text{F,P})$ des variables aléatoires de carrés intégrables dont le produit scalaire est $U|V=\int U.V.d\mathbf{P}$

Partons des n éléments Xi de cet espace et construisons la base orthonormée Yi : $Y_i = X_i\text{-Pro}j[X_i|X_1,X_2,...,X_{i-1}]$ i = 1 à n, où Proj désigne la projection orthogonale dans $L^2$ de Xi sur le sous-espace vectoriel engendré par X1,... ,X i-1.

$$\begin{bmatrix} Y_1 \\ ... \\ Y_i \\ Y_n \end{bmatrix} = \begin{bmatrix} 1 & ... & 0 & 0 \\ a2,1 & 1 & 0 & ... \\ ai,1 & ... & 1 & 0 \\ an,1 & ... & an,n-1 & 1 \end{bmatrix} \cdot \begin{bmatrix} X_1 \\ ... \\ X_i \\ X_n \end{bmatrix} = T \cdot \begin{bmatrix} X_1 \\ ... \\ X_i \\ X_n \end{bmatrix}$$

Les Yi sont orthogonaux par construction. Leur matrice de corrélation $C_Y$ est diagonale.

$$C_Y = \begin{bmatrix} \mathbf{E}(Y_1)^2 & 0 & 0 & 0 \\ 0 & \mathbf{E}(Y_2)^2 & ... & ... \\ ... \quad 0 & ... & \mathbf{E}(Y_i)^2 & 0 \\ 0 & ... & 0 & \mathbf{E}(Y_n)^2 \end{bmatrix} = T.C_X.T^T$$

$$0 \leq \det(C_Y) = \prod_1^n V(Y_i) = \det(T)^2 \det(C_x) = \det(C_x) \text{ car déterminant de T} = 1$$

Or d'après le théorème de Pythagore :

$$V(Y_i) = \|Y_i\|^2 \leq \|X_i\|^2 = V(X_i) \quad \text{car} \quad \|X_i\|^2 = \|Y_i\|^2 + \|\mathrm{Pr}\,oj[X_i|X_1, X_2,...X_{i-1}]\|^2$$

En résumé : $\det(C_x) = \prod_1^n V(Y_i) \leq \prod_1^n V(X_i)$

Cette construction est mise en défaut lorsque l'un de Xi est combinaison linéaire des autres Xj. Dans ce cas det(Cx) = 0.

La réciproque est vraie, det(Cx) = 0 entraîne que les Xi sont linéairement dépendantes.

De plus, l'inégalité devient une égalité si et seulement si les Xi sont orthogonaux entres eux.

Interprétation géométrique du déterminant de la matrice de covariance

La figure 4 représente les n impulsions du bloc d'impulsions dans $\mathbf{R}^P$ par un nuage de n points $M_j$.
$M_j = (X_j(1),..,X_j(i),..,X_j(P))$ j = 1,...,n

Le nuage formé par ces n points a pour centre de gravité G et ses axes principaux d'inertie, sont les P vecteurs unitaires $U_1, U_2,.., U_P$ par rapport auxquels l'inertie du nuage est minimale.

C'est-à-dire que les vecteurs unitaires U minimise J(U) :

$$J(\vec{U}) = \int \left[ \overrightarrow{GM}^2 - \left| \left\langle \overrightarrow{GM} | \vec{U} \right\rangle \right|^2 \right] . d\mu(M) = \int \overrightarrow{GM}^2 . d\mu(M) - \int \left\langle \overrightarrow{GM} | \vec{U} \right\rangle^2 . d\mu(M)$$

c'est-à-dire encore maximise :

$$C(\vec{U}) = \int \left\langle \overrightarrow{GM} | \vec{U} \right\rangle^2 . d\mu(M) = U^T . \frac{\sum_{j=1}^n \overrightarrow{GM} . \overrightarrow{GM}^T}{n} . U = U^T . C_{ov} . U$$

Avec $C_{ov}$ matrice de covariance empirique et $\mu$ est la mesure de masse 1 équidistribuée sur l'ensemble des points du nuage.

La maximisation sous contrainte conduit à prendre U comme vecteur propre de la matrice de corrélation de valeur propre $\lambda$.
$C_{ov}.U = \lambda.U$

Il existe P vecteurs propres orthonormés $U_1$, $U_2$, $U_p$ associés aux valeurs propres : $\lambda_1$, $\lambda_2$, $\lambda_p$ qui ramenés au point G forment un repère orthonormé par rapport auquel la matrice $C_{ov}$ est diagonale, de diagonale : $(\lambda_1, \lambda_2, \lambda_p)$.

Les P vecteurs sont les axes principaux d'inertie et les valeurs propres $\lambda_j$ représentent l'élongation du nuage dans la direction $U_j$.

Le déterminant de la matrice de corrélation, invariant par changement de base, est également le produit de ces P élongations dans les directions principales.

$$\boxed{\det(C_{ov}) = \lambda_1 . \lambda_2 ... \lambda_P}$$

En cas de problème de propagation, les valeurs des paramètres primaires se dispersent, le nuage « explose », l'une au moins des P élongations $\lambda_i$ croît sensiblement.
Le déterminant « explose » donc à son tour.

**Revendications**

**1.** Procédé de détection de phénomènes de perturbations de type « trou de propagation » (22,23) au sein d'une onde électromagnétique (11) émise par un ou plusieurs radars (12,30) sous la forme d'impulsions, lesdites impulsions étant **caractérisées par** leur instant d'arrivée TOA et un ensemble de P paramètres primaires, ledit procédé étant **caractérisé en ce qu'**il comporte au moins les étapes suivantes :

- Pour un bloc indexé temporellement par l'entier k et comportant N impulsions **caractérisées** chacune par un nombre P de paramètres primaires X(i) dont une mesure est $X_j(i)$, $1 \leq i \leq P$, $1 \leq j \leq N$, calculer une estimation $M_j(i)$ de la mesure $X_j(i)$ en prenant en compte le modèle de variation temporel théorique du paramètre X(i) en l'absence de perturbations,

- Pour le même bloc k, calculer la variance empirique $V_k(i) = \dfrac{1}{N}\sum_{j=1}^{N}\left[X_j(i) - M_j(i)\right]^2$ de chacun desdits paramètres primaires,

- Pour le même bloc k, calculer la covariance empirique de chacun des couples de paramètres primaires

$$C_k(i,l) = C_k(l,i) = \frac{1}{N}\sum_{i=1}^{N}\left[X_j(i)-M_j(i)\right]\left[X_j(l)-M_j(l)\right].$$

$$1 \leq i < l \leq P$$

- Calculer le déterminant $D_k$ de la matrice de covariance

$$Cor_k = \begin{bmatrix} V_k(1) & C_k(1,2) & ... & C_k(1,P) \\ C_k(2,1) & V_k(2) & ... & C_k(2,P) \\ ... & .. & ... & ... \\ C_k(P,1) & C_k(P,2) & ... & V_k(P) \end{bmatrix}$$, si P est strictement supérieur à 1 et affecter à $D_k$

la valeur de la variance empirique $V_k(1)$ du seul paramètre primaire utilisé dans le cas où P est égal à 1.

- Calculer la quantité $T_k = \dfrac{N^P.D_k}{\prod_{i=1}^{P} R_i . \prod_{i=1}^{P} \sigma_i^2}$ , où $R_i$ est une valeur prédéfinie et $\sigma_i$ est l'écart type nominal connu a priori du paramètre primaire d'indice i,

- Effectuer le test de comparaison suivant où $\beta$ est un entier positif donné:

➢ Si $T_k > 1 + \beta$, une perturbation est détectée sur le bloc d'indice k,
➢ Si $T_k \leq 1-\beta$, aucune perturbation n'est détectée sur le bloc d'indice k,
➢ Si $1-\beta < T_k \leq 1 + \beta$, l'information selon laquelle le bloc d'indice k est perturbé ou non est identique à celle du bloc d'indice temporel k-1.

**2.** Procédé selon la revendication 1 **caractérisé en ce que** la valeur $R_i$ est obtenue à partir d'une table de test de la loi du $\chi^2$ à $m_i$ degrés de liberté et un nombre $\varepsilon$ compris entre 0 et 1 tel que la probabilité qu'une variable aléatoire suivant la loi du $\chi^2$ à $m_i$ degrés de liberté dépasse le seuil $R_i$ est égale à $\varepsilon$.

3. Procédé selon la revendication 2 **caractérisé en ce que** ledit nombre $\varepsilon$ est obtenu à partir du taux de fausse alarme $\alpha$ résultant dudit test de comparaison effectué sur la quantité $T_k$ via la formule suivante $\varepsilon = 1 - \sqrt[p]{1-\alpha}$ , ledit taux de fausse alarme $\alpha$ étant fixé a priori.

4. Procédé selon l'une des revendications 2 ou 3 **caractérisé en ce que** l'estimation $M_j(i)$ est obtenue par un calcul de moyenne des mesures $X_j(i)$, ledit calcul étant réalisé de la façon suivante

$$M_j(i) = \frac{1}{N} \sum_{j=1}^{N} X_j(i)$$ pour au moins un des paramètres primaires et que la loi du $\chi^2$ utilisée est à $m_i =$ N - 1 degrés de liberté.

5. Procédé selon l'une des revendications 2 ou 3 **caractérisé en ce que** l'estimation $M_j(i)$ est obtenue par un calcul de régression linéaire à partir des instants d'arrivée $TOA_j$ de chaque impulsion j, ledit calcul étant réalisé de la façon suivante pour au moins un des paramètres primaires : $M_j(i) = A_0 + A_1 TOA_j$ avec

$$[A_0, A_1]^T = [W^T.W]^{-1}.W^T.[X_1(i),...,X_{N_k}(i)]^T, \ W = \begin{bmatrix} 1 & TOA_1 \\ .. & .. \\ 1 & TOA_j \\ .. & .. \\ 1 & TOA_N \end{bmatrix}$$ où $[]^T$ est

l'opérateur de transposition d'une matrice et $[]^{-1}$ est l'opérateur d'inversion d'une matrice, et que la loi du $\chi^2$ utilisée est à $m_i = N - 2$ degrés de liberté.

6. Procédé selon l'une des revendications 2 ou 3 **caractérisé en ce que** l'estimation $M_j(i)$ est obtenue par un calcul de régression parabolique à partir des instants d'arrivée $TOA_j$ de chaque impulsion j, ledit calcul étant réalisé de la façon suivante pour au moins un des paramètres primaires : $M_j(i) = A_0 + A_1 TOA_j + A_2 TOA_j^2$ avec $[A_0, A_1, A_2]^T =$

$$[U^T.U]^{-1}.U^T.[X_1(i),...,X_N(i)]^T, \quad U = \begin{bmatrix} 1 & TOA_1 & TOA_1^2 \\ \vdots & \vdots & \vdots \\ 1 & TOA_j & TOA_j^2 \\ \vdots & \vdots & \vdots \\ 1 & TOA_N & TOA_N^2 \end{bmatrix}$$ où $[]^T$ est l'opérateur de transposition d'une matrice et $[]^{-1}$ est l'opérateur d'inversion d'une matrice, et que la loi du $\chi^2$ utilisée est à $m_i = N - 3$ degrés de liberté.

7. Procédé selon l'une des revendications précédentes **caractérisé en ce que** l'estimation $M_j(i)$ est préalablement filtrée par un filtre autorégressif d'ordre 2 ou un filtre de Kalman d'ordre 2.

8. Procédé selon l'une des revendications précédentes **caractérisé en ce que** la quantité $T_k$ est filtrée par un filtre lisseur avant d'être utilisée pour ledit test de comparaison.

9. Procédé selon la revendication 8 **caractérisé en ce que** ledit filtre lisseur utilisé pour filtrer la quantité $T_k$ est un filtre du premier ordre ou un filtre à moyenne glissante.

10. Procédé selon l'une des revendications précédentes **caractérisé en ce que** lesdits paramètres primaires correspondent à la fréquence de l'impulsion ou à la largeur de l'impulsion ou au niveau de puissance reçu sur l'impulsion ou à l'angle d'arrivée de ladite onde estimé sur l'impulsion.

**Claims**

1. A method for detecting "propagation hole" (22, 23) type disturbance phenomena within an electromagnetic wave (11) emitted by one or more radars (12, 30) in the form of pulses, said pulses being **characterised by** their time of arrival TOA and a set of P primary parameters, said method being **characterised in that** it comprises at least the following steps:

   - calculating, for a block temporally indexed by the integer k and comprising N pulses each **characterised by** a number P of primary parameters X(i) for which a measured value is $X_j(i)$, $1 \leq i \leq P$, $1 \leq j \leq N$, an estimate $M_j(i)$ of the measured value $X_j(i)$ taking into account the theoretical time variation model of the parameter X(i) in the absence of disturbance,

   - calculating, for the same block k, the empirical variance $V_k(i) = \frac{1}{N} \sum_{j=1}^{N} \left[ x_j(i) - M_j(i) \right]^2$ of each of said primary parameters,

   - calculating, for the same block k, the empirical covariance of each pair of primary parameters $C_k(i,l) = C_k(l,i) = \frac{1}{N} \sum_{j=1}^{N} \left[ X_j(i) - M_j(i) \right] \left[ X_j(l) - M_j(l) \right]$, $1 \leq i < l \leq P$,

   calculating the determinant $D_k$ of the covariance matrix

   $$Cor_k = \begin{bmatrix} V_k(1) & C_k(1,2) & ... & C_k(1,P) \\ C_k(2,1) & V_k(2) & ... & C_k(2,P) \\ ... & .. & ... & ... \\ C_k(P,1) & C_k(P,2) & ... & V_k(P) \end{bmatrix},$$

   if P is strictly greater than 1 and assigning the value of the empirical variance $V_k(1)$ of the single primary parameter used to $D_k$ in the event that P is equal to 1,

   - calculating the quantity $T_k = \dfrac{N^P . D_k}{\prod_{i=1}^{P} R_i . \prod_{i=1}^{P} \sigma_i^2}$, where $R_i$ is a predefined value and $\sigma_i$ is the nominal standard deviation a priori known of the primary parameter of the index i,

   - performing the following comparison test where β is a given positive integer:

   ➢ if $T_k > 1 + \beta$, a disturbance is detected on the block of index k,
   ➢ if $T_k \leq 1 - \beta$, no disturbance is detected on the block of index k,
   ➢ if $1 - \beta < T_k \leq 1 + \beta$, the information according to which the block of index k is disturbed or not disturbed is identical to that of the block of time index k-1.

2. The method according to claim 1, **characterised in that** the value $R_i$ is obtained from a test table of the law of $\chi^2$ at $m_i$ degrees of freedom and a number $\in$ between 0 and 1, so that the likelihood that a random variable according to the law of $\chi^2$ at $m_i$ degrees of freedom exceeds the threshold $R_i$ is equal to $\in$.

3. The method according to claim 2, **characterised in that** said number $\in$ is obtained from the rate of false alarm α resulting from said comparison test performed on the quantity $T_k$ through the following formula $\varepsilon = 1 - \sqrt[P]{1 - \alpha}$, said rate of false alarm α being a priori set.

4. The method according to claim 2 or 3, **characterised in that** the estimate $M_j(i)$ is obtained by a calculation of the average of the measured values $X_j(i)$, said calculation being undertaken as follows: $M_j(i) = \dfrac{1}{N}\sum_{j=1}^{N} X_j(i)$ for at least one of the primary parameters and that the law of $\chi^2$ used has $m_i = N-1$ degrees of freedom.

5. The method according to claim 2 or 3, **characterised in that** the estimate $M_j(i)$ is obtained by a linear regression calculation from the times of arrival $TOA_j$ of each pulse j, said calculation being undertaken as follows for a least one of the primary parameters:

$$M_j(i) = A_0 + A_1 TOA_j \text{ with } \quad [A_0, A_1]^T = [W^T.W]^{-1}.W^T.[X_1(i),...,X_{N_L}(i)]^T, \quad W = \begin{bmatrix} 1 & TOA_1 \\ .. & .. \\ 1 & TOA_j \\ .. & .. \\ 1 & TOA_N \end{bmatrix}$$

where $[]^T$ is the transposition operator of a matrix and $[]^{-1}$ is the inversion operator of a matrix, and that the law of $\chi^2$ used has $m_i = N - 2$ degrees of freedom.

6. The method according to claim 2 or 3, **characterised in that** the estimate $M_j(i)$ is obtained by a parabolic regression calculation from the times of arrival $TOA_j$ of each pulse j, said calculation being undertaken as follows for a least one of the primary parameters:

$$M_j(i) = A_0 + A_1 TOA_j + A_2 TOA_j^2 \text{ with } [A_0, A_1, A_2]^T = [U^T.U]^{-1}.U^T.[X_1(i),...,X_N(i)]^T,$$

$$U = \begin{bmatrix} 1 & TOA_1 & TOA_1^2 \\ \vdots & \vdots & \vdots \\ 1 & TOA_j & TOA_j^2 \\ \vdots & \vdots & \vdots \\ 1 & TOA_N & TOA_N^2 \end{bmatrix}$$

where $[]^T$ is the transposition operator of a matrix and $[]^{-1}$ is the inversion operator of a matrix, and that the law of $\chi^2$ used has $m_i = N - 3$ degrees of freedom.

7. The method according to any one of the preceding claims, **characterised in that** the estimate $M_j(i)$ is filtered in advance through a self-regressive filter of the order of 2 or a Kalman filter of the order of 2.

8. The method according to any one of the preceding claims, **characterised in that** the quantity $T_k$ is filtered through a smoothing filter before being used for said comparison test.

9. The method according to claim 8, **characterised in that** said smoothing filter used to filter the quantity $T_k$ is a filter of the first order or a running mean filter.

10. The method according to any one of the preceding claims, **characterised in that** said primary parameters correspond to the pulse frequency or to the pulse width or to the level of power received on the pulse or to the angle of arrival of said wave estimated on the pulse.

**Patentansprüche**

1. Verfahren zum Erkennen eines Störungsphänomens des Typs "Ausbreitungsloch" (22, 23) im Innern einer elektromagnetischen Welle (11), die von einem oder mehreren Radaren (12, 30) in Form von Impulsen ausgesendet wird, wobei die Impulse durch ihre Ankunftszeit TOA und einen Satz von P Primärparamatem **gekennzeichnet** sind, wobei das Verfahren **dadurch** gekenntzeichnet ist, dass es wenigstens die folgenden Schritte beinhaltet:

- Berechnen, für einen Block, der zeitlich durch die ganze Zahl k indexiert ist und N Impulse umfasst, die jeweils durch eine Zahl P von Pnimärparametern X(i) **gekennzeichnet** sind, für die ein Messwert $X_j(i)$ $1 \leq i \leq P$, $1 \leq j \leq N$ ist, einer Schätzung $M_j(i)$ des Messwertes $X_j(i)$ unter Berücksichtigung des theoretischen Zeitvariationsmodells des Parameters X(i) in Abwesenheit von Störungen,

- Berechnen, für denselben Block k, der empirischen Varianz $V_k(i) = \frac{1}{N} \sum_{j=1}^{N} \left[ X_j(i) - M_j(i) \right]^2$ jedes der Primärparameter,

- Berechnen, für denselben Block k, der empirischen Kovarianz jedes Paares von Primärparametern

$$C_k(i,l) = C_k(l,i) = \frac{1}{N} \sum_{j=1}^{N} \left[ X_j(i) - M_j(i) \right] \left[ X_j(l) - M_j(l) \right] \quad 1 \leq i < l \leq P,$$

- Berechnen der Determinanten $D_k$ der Kovarianzmatrix

$$Cor_k = \begin{bmatrix} V_k(1) & C_k(1,2) & \dots & C_k(1,P) \\ C_k(2,1) & V_k(2) & \dots & C_k(2,P) \\ \dots & \dots & \dots & \dots \\ C_k(P,1) & C_k(P,2) & \dots & V_k(P) \end{bmatrix}$$ wenn P strikt größer als 1 ist, und Zuordnen des Wertes der empirischen

Varianz $V_k(1)$ des einzigen verwendeten Primärparameters zu $D_k$ in dem Fall, dass P gleich 1 ist,

- Berechnen der Menge $T_k = \dfrac{N^P . D_k}{\prod_{i=1}^{P} R_i . \prod_{i=1}^{P} \sigma_i^2}$ wobei $R_i$ ein vordefinierter Wert ist und $\sigma_i$, die a priori bekannte nominelle Standardabweichung des Primärparameters von Index i ist,
- Durchführen des folgenden Vergleichstests, wobei $\beta$ eine gegebene positive ganze Zahl ist:

  ➢ wenn $T_k > 1+\beta$, wird eine Störung am Block von Index k erfasst,
  ➢ wenn $T_k \leq 1-\beta$, wird keine Störung am Block von Index k erfasst,
  ➢ wenn $1-\beta < T_k \leq 1+\beta$, sind die Informationen, gemäß denen der Block von Index k gestört oder nicht gestört ist, identisch mit denen des Blocks von Zeitindex k-1.

**2.** Verfahren nach Anspruch 1, **dadurch gekennzeichnet, dass** der Wert $R_i$ erhalten wird von einer Testtabelle des Gesetzes von $\chi^2$ mit $m_i$ Freiheitsgraden und einer Zahl $\in$ zwischen 0 und 1, so dass die Wahrscheinlichkeit, dass eine Zufallsvariable gemäß dem Gesetz von $\chi^2$ mit $m_i$ Freiheitsgraden den Schwellenwert $R_i$ übersteigt, gleich $\in$ ist.

**3.** Verfahren nach Anspruch 2, **dadurch gekennzeichnet, dass** die Zahl $\in$ erhalten wird von der Fehlalarmrate $\alpha$, die von dem Vergleichstest resultiert, der an der Menge $T_k$ über die folgende Formel $\varepsilon = 1 - \sqrt[P]{1-\alpha}$ durchgerührt wird, wobei die Fehlalarmrate $\alpha$ a priori festgelegt wird.

**4.** Verfahren nach Anspruch 2 oder 3, **dadurch gekennzeichnet, dass** die Schätzung $M_j(i)$ erhalten wird durch Berechnen des Durchschnitts der Messwerte $X_j(i)$, wobei die

Berechnung auf die folgende Weise: $M_j(i) = \frac{1}{N} \sum_{j=1}^{N} X_j(i)$ für wenigstens einen der Primärparameter durchgeführt wird und dass das Gesetz des benutzten $\chi^2$ $m_i$ = N - 1 Freiheitsgrade hat.

**5.** Verfahren nach Anspruch 2 oder 3, **dadurch gekennzeichnet, dass** die Schätzung $M_j(i)$ erhalten wird durch lineare Regressionsberechnung von den Ankunftszeiten $TOA_j$ jedes Impulses j, wobei die Berechnung wie folgt für wenigstens einen der Primärparameter durchgeführt wird: $M_j(i) = A_0 + A_1 TOA_j$ mit

$$[A_0, A_1]^T = [W^T.W]^{-1}.W^T.[X_1(i),...,X_{N_L}(i)]^T, \quad W = \begin{bmatrix} 1 & TOA_1 \\ .. & .. \\ 1 & TOA_J \\ .. & .. \\ 1 & TOA_N \end{bmatrix}$$ wobei $[]^T$ der Transpositionsoperator einer Matrix

und $[]^{-1}$ der Inversionsoperator einer Matrix ist, und dass das Gesetz des verwendeten $\chi^2$ $m_i$ = N - 2 Freiheitsgrade hat.

6. Verfahren nach Anspruch 2 oder 3, **dadurch gekennzeichnet, dass** die Schätzung $M_j(i)$ erhalten wird durch parabolische Regressionsberechnung von den Ankunftszeiten $TOA_j$ jedes Impulses j, wobei die Berechnung wie folgt für wenigstens einen der Primärparameter durchgeführt wird: $M_j(i)=A_0+A_1 TOA_j+A_2 TOA_j^2$

mit $[A_0, A_1, A_2]^T=[U^T.U]^{-1}.U^T[X_1(i),...,X_N(i)]^T$,

$$U = \begin{bmatrix} 1 & TOA_1 & TOA_1^2 \\ \vdots & \vdots & \vdots \\ 1 & TOA_j & TOA_j^2 \\ \vdots & \vdots & \vdots \\ 1 & TOA_N & TOA_N^2 \end{bmatrix}$$

wobei $[]^T$ der Transpositionsoperator einer Matrix ist und $[]^{-1}$ der Inversionsoperator einer Matrix ist, und dass das Gesetz des verwendeten $\chi^2$ $m_i$ = N - 3 Freiheitsgrade hat.

7. Verfahren nach einem der vorherigen Ansprüche, **dadurch gekennzeichnet, dass** die Schätzung $M_j(i)$ vorab durch ein selbstregressives Filter zweiter Ordnung oder ein Kalman-Filter zweiter Ordnung gefiltert wird.

8. Verfahren nach einem der vorherigen Ansprüche, **dadurch gekennzeichnet, dass** die Menge $T_k$ von einem Glättungsfilter gefiltert wird, bevor es für den Vergleichstest benutzt wird.

9. Verfahren nach Anspruch 8, **dadurch gekennzeichnet, dass** das Glättungsfilter zum Filtern der Menge $T_k$ ein Filter erster Ordnung oder ein Gleitender-Mittelwert-Filter ist.

10. Verfahren nach einem der vorherigen Ansprüche, **dadurch gekennzeichnet, dass** die Primärparameter der Impulsfrequenz oder der Impulsbreite oder dem auf dem Impuls empfangenen Leistungspegel oder dem Ankunftswinkel der an dem Impuls geschätzten Welle entsprechen.

Système de
détection,10
(récepteur)

Trajet direct,
11

Radar
émetteur,12

Trajet
réfléchi,13

$h_1$

$h_2$

d

Obstacle,14

FIG.1

FIG.2

30 — Emetteur (Radar)

31 — Récepteur → 32 — Tri impulsions

34 — Détection trous de propagation

33 — Analyse

35 — Identification /Détection

# FIG.3

niveau

U2

G

U1

LI

# FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008002144 A